# DEMANDE DE BREVET EUROPEEN

(11) **EP 4 559 631 A1**
(43) Date de publication de la demande: **28.05.2025**
(21) Numéro de dépôt: 24207385.6
(22) Date de dépôt: 18.10.2024
(51) Int. Cl.: B25J 9/00, B23Q 11/00, B25J 9/16, B25J 11/00, B25J 19/00, B23Q 1/00, B23Q 16/00

(54) **MACHINE D'USINAGE STABILISÉE, KIT DE STABILISATION POUR MACHINE D'USINAGE ET PROCÉDÉ DE PILOTAGE D'UNE TELLE MACHINE**

(30) Priorité: 21.11.2023 FR 2312830; 06.03.2024 FR 2402266
(71) Demandeur: Sotimeco, 87280 Limoges (FR)
(72) Inventeur: Cousin, Thierry, 87280 Limoges (FR)
(74) Mandataire: Gsmart

(57) **Abrégé**

La présente invention concerne une machine d'usinage stabilisée, un kit de stabilisation pour machine d'usinage et un procédé de stabilisation,
caractérisés en ce qu'ils comportent un stabilisateur également piloté par ladite unité de contrôle (CU) et comprenant :
- au moins un support (2) monté solidaire du sol et muni d'au moins trois tendeurs (20) répartis autour de ladite tête (10), de préférence à équidistance entre elles,
- au moins trois câbles (21) reliant ladite tête (10) auxdits tendeurs (20),
- des moyens (22) réglables de tension desdits câbles (21) entre ladite tête (10) et lesdits tendeurs (20),
- des moyens (23) de déplacement desdits tendeurs (20) sur ledit support (2),
ladite unité de contrôle (CU) pilotant le déplacement individuel de chacune des tendeurs et la tension de chacun des câbles (21) en fonction desdites positions et inclinaisons de ladite tête (10) au cours de l'usinage.

## Description

La présente invention concerne le domaine des machines (ou robots) d'usinage. Les termes « machine » et « robot » (ou « machine-outil » ou encore « automate ») sont utilisés indifféremment dans la présente demande pour désigner les dispositifs robotisés utilisés pour la conception de pièces, que ce soit par fraisage, soudure, impression 3D, etc. Le terme d'usinage est donc utilisé dans la présente demande pour désigner la fabrication en usine par des robots ou automates et n'est pas limité au type d'outil équipant la machine.

En particulier, la présente invention concerne une machine d'usinage stabilisée et un kit de stabilisation pour les machines d'usinage.

Dans ce domaine des machines d'usinage, il existe un problème de stabilité, notamment à l'extrémité de la machine qui réalise l'usinage des pièces. En effet, les machines d'usinage sont généralement de grands bras robotiques montés sur un socle et possédant une l'extrémité mobile (appelée « tête » dans la présente demande) qui porte les outils d'usinage (outil de coupe, de fraisage, d'impression, de soudure, etc.) et se déplace dans les trois directions de l'espace afin d'usiner les pièces avec diverses orientations. On parle dans la présente demande de bras robotique pour désigner tous types de machines d'usinage robotisées à plusieurs axes, comme par exemple les bras robotisés ou les machines à axe linéaire, etc. En général, comme le porte-à-faux est important entre le socle et la tête, il est prévu que le socle soit lourd et/ou fixé au sol et que le bras soit configuré (notamment en dimensions et rigidité) pour lutter contre les vibrations et forces exercées par les outils sur les pièces en cours d'usinage, qui risquent de limiter la précision de l'usinage. Cependant, ce problème reste récurrent dans l'art antérieur et aucune solution connue ne permet d'améliorer la stabilité et/ou la précision des machines, du moins sans générer de surcoût important.

Un but de la présente invention est donc de pallier au moins certains inconvénients de l'art antérieur en proposant une machine d'usinage stabilisée.

Ce but est atteint par une machine d'usinage comportant au moins un bras robotique possédant une première extrémité montée sur un socle et une seconde extrémité munie d'une tête portant au moins un outil d'usinage, ledit bras robotique étant articulé et motorisé pour déplacer la tête dans diverses positions et inclinaisons par rapport à des pièces à usiner, en fonction de paramètres déterminés par au moins une unité de contrôle pilotant le déplacement de ladite tête au cours de l'usinage, caractérisé en ce qu'elle comporte un stabilisateur également piloté par ladite unité de contrôle et comprenant :
- au moins un support monté solidaire du sol et muni d'au moins trois tendeurs répartis autour de ladite tête, de préférence à équidistance entre elles,
- au moins trois câbles reliant ladite tête auxdits tendeurs,
- des moyens réglables de tension desdits câbles entre ladite tête et lesdits tendeurs,
- des moyens de déplacement desdits tendeurs sur ledit support,
ladite unité de contrôle pilotant le déplacement individuel de chacune des tendeurs et la tension de chacun des câbles en fonction desdites positions et inclinaisons de ladite tête au cours de l'usinage.

Selon une autre particularité, les tendeurs et les câbles sont configurés par paires, avec au moins trois paires répartis autour de ladite tête d'usinage et, au sein de chaque paire, les tendeurs sont disposés de part et d'autre de la tête d'usinage, de façon à ce que la force de tension exercée sur ladite tête d'usinage par chacun des tendeurs possède au moins une composante de sens opposé à celle de l'autre tendeur de la même paire.

Selon une autre particularité, l'unité de contrôle pilote le déplacement de chacun des tendeurs et la tension de chacun des câbles de sorte que les forces exercées par les différents câbles sur la tête d'usinage se compensent entre elles, de préférence pour que leur somme soit nulle.

Selon une autre particularité, chacun desdits câbles est monté sur la tête à l'aide d'une attache libre de pivoter en fonction de l'inclinaison des câbles par rapport à l'horizontale.

Selon une autre particularité, chacune desdits attaches est configurée pour se déplacer librement sur une platine solidaire de la tête, selon un trajet circulaire centré sur ladite tête, afin que les pivots se positionnent en fonction de l'orientation et la longueur de chacun des câbles.

Selon une autre particularité, ledit support comporte au moins une paroi possédant une section transversale de forme circulaire ou elliptique entourant ledit bras robotique.

Selon une autre particularité, ledit support comporte au moins une paroi possédant une section de forme rectangulaire ou carrée entourant ledit bras robotique.

Selon une autre particularité, ledit support comporte au moins trois poteaux perpendiculaires au sol et répartis autour dudit bras robotique, de préférence à équidistance entre eux.

Selon une autre particularité, chacun desdits moyens de déplacement desdits tendeurs sur ledit support comporte un chariot motorisé piloté par ladite unité de contrôle pour se déplacer sur un rail afin d'ajuster la hauteur de ledit tendeur par rapport au sol.

Selon une autre particularité, le stabilisateur comporte également des moyens de déplacement latéral des tendeurs, pour régler leurs positions respectives autour de la tête.

Selon une autre particularité, lesdits moyens réglables de tension desdits câbles comportent au moins un enrouleur de câble piloté par ladite unité de contrôle et formant ledit tendeur.

Un but de la présente invention est de pallier au moins certains inconvénients de l'art antérieur en proposant un kit de stabilisation pour machines d'usinage, afin d'améliorer la stabilité et/ou la précision des machines d'usinage de l'art antérieur.

Ce but est atteint par un kit de stabilisation pour machine d'usinage, caractérisé en ce qu'il comporte un stabilisateur selon divers modes de réalisation.

Un but de la présente invention est de pallier au moins certains inconvénients de l'art antérieur en proposant un procédé de pilotage et/ou de stabilisation de machine d'usinage, afin d'améliorer la stabilité et/ou la précision des machines d'usinage de l'art antérieur.

Ce but est atteint par un procédé de pilotage de machine d'usinage selon divers modes de réalisation, caractérisé en ce qu'il est mis en oeuvre par une unité de contrôle réalisant les étapes suivantes à chaque déplacement de la tête d'usinage :
- détermination de la position de la tête du bras robotique dans l'espace, notamment par rapport au socle,
- détermination de l'inclinaison de la tête du bras robotique par rapport à la verticale,
- détermination, à partir desdites position et inclinaison de la tête, des positions nécessaires desdits tendeurs pour qu'ils soient situés dans un même plan, dont l'inclinaison dépend de celle de la tête,
- pilotage des moyens de déplacement et des moyens réglables de tension des câbles pour positionner lesdits tendeurs auxdites positions nécessaires déterminées et fournir une tension des câbles pour stabiliser la tête dans ledit plan.

Ce but est atteint également par un procédé de pilotage de machine d'usinage selon l'invention, caractérisé en ce qu'il est mis en oeuvre par une unité de contrôle réalisant les étapes suivantes à chaque déplacement de la tête d'usinage :
- détermination de la position de la tête du bras robotique dans l'espace, notamment par rapport au socle,
- détermination de l'inclinaison de la tête du bras robotique par rapport à la verticale,
- détermination, à partir desdites position et inclinaison de la tête, des positions nécessaires desdits tendeurs pour une compensation mutuelle entre les différentes composantes des forces de tension exercées par tous les tendeurs sur la tête d'usinage,
- pilotage des moyens de déplacement et des moyens réglables de tension des câbles pour positionner lesdits tendeurs auxdites positions nécessaires déterminées et fournir une tension des câbles de sorte que les différentes forces exercées sur la tête se compensent entre elles, de préférence avec une résultante nulle.

D'autres particularités et avantages de la présente invention apparaîtront plus clairement à la lecture de la description de divers modes de réalisation ci-après, faite en référence aux dessins annexés, dans lesquels :
[Fig 1] la [Fig 1] représente une vue en perspective d'une machine d'usinage selon certains modes de réalisation ;
[Fig 2] la [Fig 2] représente une vue de dessus d'une machine d'usinage de la [Fig 1] ;
[Fig 3] la [Fig 3] représente une vue en perspective d'une machine d'usinage selon certains modes de réalisation ;
[Fig 4] la [Fig 4] représente une vue en perspective du détail 4 de la figure 4 montrant un tendeur d'une machine d'usinage selon certains modes de réalisation ;
[Fig 5] la [Fig 5] représente une vue de dessus d'une machine d'usinage selon certains modes de réalisation ;
[Fig 6] la [Fig 6] représente une vue en perspective d'une machine d'usinage selon certains modes de réalisation ;
[Fig 7] la [Fig 7] représente une vue en perspective d'une machine d'usinage selon certains modes de réalisation.

La présente demande concerne une machine d'usinage stabilisée et un kit de stabilisation pour machine d'usinage. Les machines d'usinage, telles que définies de manière non limitative dans le préambule de la présente demande, comportent en général au moins un bras robotique (1) possédant une première extrémité montée sur un socle (11) et une seconde extrémité munie d'une tête (10) portant au moins un outil d'usinage, ledit bras robotique (1) étant articulé et motorisé pour déplacer la tête (10) dans diverses positions et inclinaisons par rapport à des pièces à usiner, en fonction de paramètres déterminés par au moins une unité de contrôle (CU) pilotant le déplacement de ladite tête (10) au cours de l'usinage, caractérisé en ce qu'elle comporte un stabilisateur également piloté par ladite unité de contrôle (CU) et comprenant :
- au moins un support (2) monté solidaire du sol et muni d'au moins trois tendeurs (20) réparties autour de ladite tête (10), de préférence à équidistance entre elles,
- au moins trois câbles (21) reliant ladite tête (10) auxdits tendeurs (20),
- des moyens (22) réglables de tension desdits câbles (21) entre ladite tête (10) et lesdits tendeurs (20),
- des moyens (23) de déplacement desdits tendeurs (20) sur ledit support (2), ladite unité de contrôle (CU) pilotant le déplacement individuel de chacune des tendeurs et la tension de chacun des câbles (21) en fonction desdites positions et inclinaisons de ladite tête (10) au cours de l'usinage.

On comprend que l'on obtient ainsi une machine d'usinage dont la tête est stabilisée grâce au fait qu'une unité de contrôle (la même que celle de la machine elle-même ou une autre unité de contrôle dédiée) déplacent les tendeurs des câbles reliées à la tête afin d'exercer une tension qui limite les risques de mouvements ou vibrations de la tête et améliore ainsi la précision de la machine grâce à l'aide d'un support solide ancré au sol (comme un châssis un cadre ou un conteneur).

Dans certains modes de réalisation, les tendeurs (20) et les câbles (21) sont configurés par paires, avec au moins trois paires répartis autour de ladite tête (10) d'usinage. Dans ce cas, au sein de chaque paire, les tendeurs (20) sont disposés de part et d'autre de la tête (10) d'usinage, de façon à ce que la force de tension exercée sur ladite tête (10) d'usinage par chacun des tendeurs (20) possède au moins une composante de sens opposé à celle de l'autre tendeur de la même paire.

De plus, dans certains modes de réalisation, l'unité de contrôle (CU) pilote le déplacement de chacun des tendeurs (20) et la tension de chacun des câbles (21) de sorte que les forces exercées par les différents câbles sur la tête (10) d'usinage se compensent entre elles, de préférence pour que leur somme soit nulle.

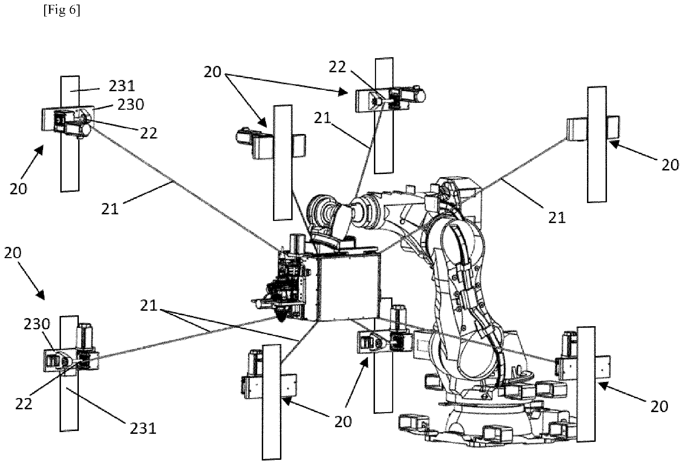

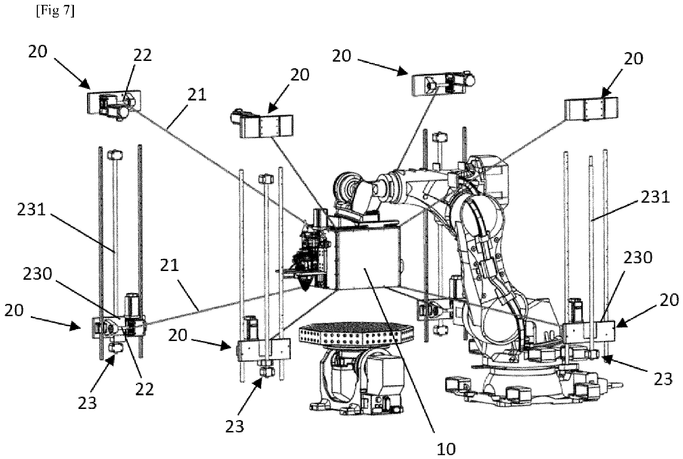

On comprend que, dans le cas d'au moins trois câbles, l'unité de contrôle (CU) répartit les câbles dans un même plan, de préférence horizontal. Dans le cas d'au moins trois paires de câbles, la répartition est tridimensionnelle de sorte que la tête d'usinage soit stabilisée verticalement et transversalement. De préférence, les tendeurs et câbles sont agencés par paires, de sorte que les tensions qu'ils exercent sur la tête d'usinage puisse se compenser au sein d'une même paire, au moins pour une composante, par exemple verticale. En effet, en prévoyant des paires comprenant un tendeur supérieur et un tendeur inférieur, il est plus facile de faire en sorte que les composantes verticales se compensent (une composante de tension vers le haut et une tension vers le bas, respectivement). Ainsi, au sein d'une même paire, les composantes verticales se compensent tandis que les composantes horizontales seront compensées d'une parie à une autre. Il est également possible de prévoir que les paires concernent plutôt deux tendeurs diamétralement opposés par rapport à la tête, mais il est plus simple de concevoir le système avec des paires de tendeurs alignés verticalement. Ainsi, dans l'exemple de la figure 6, le tendeur supérieur peut se déplacer verticalement sur un rail, mais il reste aligné par rapport au tendeur inférieur qui se déplace verticalement sur son propre rail. Dans l'exemple de la figure 7, seul le tendeur inférieur se déplace verticalement sur son propre rail alors que le tendeur supérieur reste immobile, mais ces tendeurs d'une même paire restent de préférence alignés verticalement pour faciliter la compensation des forces de tension et le pilotage par l'unité de contrôle. Dans un autre exemple non représenté, les deux tendeurs (supérieur et inférieur) se déplacent tous les deux verticalement sur un unique rail commun.

On notera que l'unité de contrôle est décrite ici de manière fonctionnelle et qu'elle peut prendre diverses formes à la portée de l'homme de métier (par exemple des cartes électroniques et/ou des moyens informatiques comprenant au moins un processeur, avec éventuellement des microcontrôleurs pour piloter les moteurs, etc.) et l'utilisation de plusieurs unités de contrôle coopérant ensemble l'est également. Ainsi, un kit de stabilisation comportant une unité de contrôle dédiée communiquant avec l'unité de contrôle de la machine elle-même est également envisagé. La présente demande concerne donc également un kit de stabilisation pour machine d'usinage, comportant un stabilisateur tel que décrit dans la présente demande. De plus, on comprend que la présente demande concerne également un procédé de stabilisation d'usinage ou un procédé de pilotage de machine d'usinage stabilisée telle que décrite dans la présente demande et que, selon les variantes de réalisation, il est possible de prévoir une stabilisation dans seulement un plan ou une stabilisation tridimensionnelle (i.e., dans les trois dimensions de l'espace). Dans le cas d'un plan, un tel procédé est mis en oeuvre par une unité de contrôle (CU) réalisant les étapes suivantes à chaque déplacement de la tête (10) d'usinage :
- détermination de la position de la tête (10) du bras robotique (1) dans l'espace, notamment par rapport au socle (11),
- détermination de l'inclinaison de la tête (10) du bras robotique (1) par rapport à la verticale,
- détermination, à partir desdites position et inclinaison de la tête (10), des positions nécessaires desdits tendeurs (20) pour qu'ils soient situés dans un même plan, dont l'inclinaison dépend de celle de la tête,
- pilotage des moyens de déplacement (23) et des moyens (22) réglables de tension des câbles (21) pour positionner lesdits tendeurs (20) auxdites positions nécessaires déterminées et fournir une tension des câbles (21) pour stabiliser la tête (10) dans ledit plan.

Ce plan commun de stabilisation (par mise en tension) peut dépendre de la position et l'inclinaison de la tête mais également du type d'usinage effectué et des forces qui en résultent. De plus, ce plan peut dépendre d'un éventuel support d'usinage (14) pivotant sur lequel peut être disposée la pièce à usiner, comme bien connu de l'homme de métier et illustré par exemple sur la figure 7.

D'autre part, dans le cas d'une stabilisation tridimensionnelle, le procédé de pilotage pourra tenir compte des composantes verticales et horizontales de forces. Dans ce cas, le procédé pourra comporter :
- détermination de la position de la tête (10) du bras robotique (1) dans l'espace, notamment par rapport au socle (11),
- détermination de l'inclinaison de la tête (10) du bras robotique (1) par rapport à la verticale,
- détermination, à partir desdites position et inclinaison de la tête (10), des positions nécessaires desdits tendeurs (20) pour une compensation mutuelle entre les différentes composantes des forces de tension exercées par tous les tendeurs sur la tête d'usinage,
- pilotage des moyens de déplacement (23) et des moyens (22) réglables de tension des câbles (21) pour positionner lesdits tendeurs (20) auxdites positions nécessaires déterminées et fournir une tension des câbles (21) de sorte que les différentes forces exercées sur la tête se compensent entre elles, de préférence avec une résultante nulle.

La tension des câbles (et leur pilotage, ainsi qu'éventuellement la résultante des forces de tension) pourra être ajustée en fonction du type d'usinage en cours et notamment des outils utilisés (outil de coupe, de fraisage, d'impression, de soudure, etc.) puisqu'ils n'ont pas tous les mêmes couples et n'exercent pas les mêmes efforts sur la tête. En particulier, une machine d'usinage « hybride » est envisagée, avec notamment une tête d'impression 3D, pour compléter le type d'opérations possibles avec la machine. De préférence, divers types de capteurs seront utilisés par l'unité de contrôle pour ajuster correctement les divers paramètres qui entrent en compte pour la stabilisation. En particulier, au moins un capteur de tension (e.g., tensiomètre) sera présent, de préférence pour chacun des câbles, afin de vérifier que la bonne tension est appliquée et éviter de forcer sur le bras robotique (1). D'autre part, le stabilisateur comporte de préférence au moins un niveau électronique disposé au moins au niveau de la tête. Le stabilisateur comportera donc au moins un niveau positionné par exemple au moins sur la platine (12), mais de préférence également sur les câbles (21), par exemple à proximité des tendeurs, pour vérifier l'inclinaison correcte des câbles, suite au positionnement des tendeurs en fonction de l'inclinaison détectée au niveau de la tête. On comprend que l'unité de contrôle peut ainsi piloter les divers dispositifs en utilisant divers types de capteurs et que les exemples fournis ici ne sont pas limitatifs.

Dans certains modes de réalisation, chacun desdits câbles (21) est monté sur la tête (10) à l'aide d'une attache (210) libre de pivoter en fonction de l'inclinaison des câbles (21) par rapport à l'horizontale. Une telle attache peut être formée par un pivot (par exemple avec une à tête sphérique retenue dans un logement, permettant le mouvement du câble dans un cône dont le sommet est centré sur cette tête sphérique), mais comme il s'agit de attaches de câbles, cette liberté de mouvement peut simplement être fourni par le câble lui-même. L'utilisation d'un pivot permettra néanmoins de limiter l'usure des câbles en les soumettant moins aux efforts qui sont concentrés au niveau de cette attache.

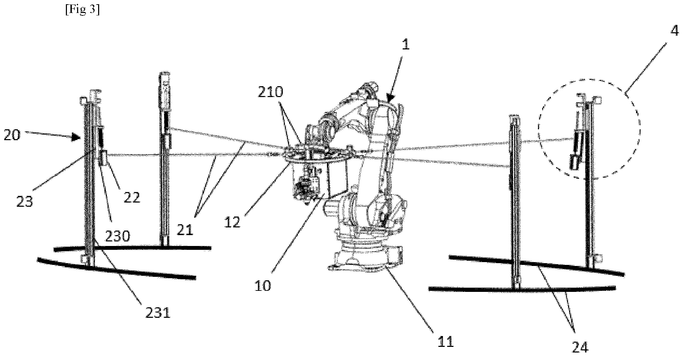

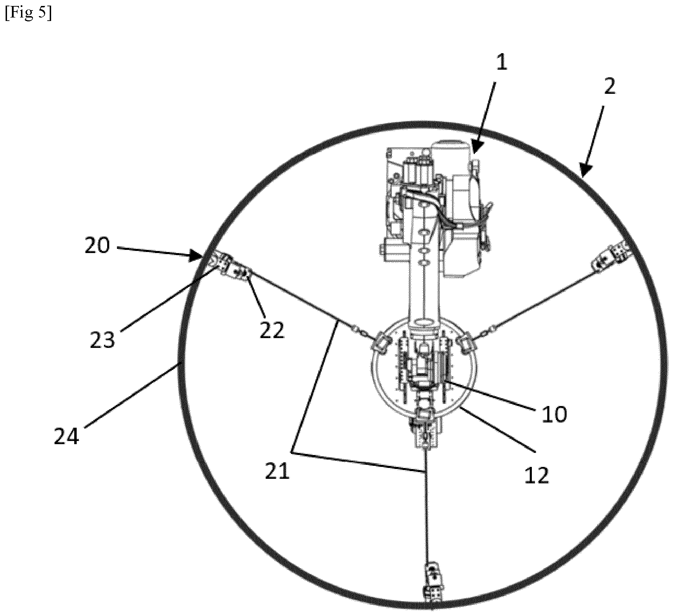

Dans certains modes de réalisation, chacune desdits attaches (210) est configurée pour se déplacer librement sur une platine (12) solidaire de la tête (10), selon un trajet circulaire centré sur ladite tête (10), afin que les attaches (210) se positionnent en fonction de l'orientation et la longueur de chacun des câbles (21). Des roulettes sont par exemple prévues pour faciliter le déplacement sur la platine (12) formant par exemple une couronne sur laquelle sont retenues les attaches dont les roulettes assurent la mobilité et la solidité de l'ensemble. En effet, comme la tête (10) peut se déplacer par rapport à la position des tendeurs (20) sur le support (2), afin de permettre que les tensions exercées par les différents câbles (dont la longueur respective est ajustée en fonction des déplacement de la tête) soient correctement réparties autour de la tête, il est préférable que la position des attaches (210) des câbles sur la tête puisse s'adapter automatiquement à l'orientation des câbles, ce qui est de préférence obtenu simplement par le fait que les attaches se déplacent sur un couronne commune ou sur des arcs de cercles respectifs afin d'autoriser un déplacement de la fixation qui reste centré par rapport au centre de la tête. Réciproquement (et de façon non exclusive de ces mouvements des attaches), il peut être utile que les tendeurs soient mobiles autour de la tête et pas seulement verticalement pour l'inclinaison des câbles mais également pour l'orientation des câbles (donc radialement par rapport au centre de la tête). Ainsi, certains modes de réalisation, le stabilisateur comporte également des moyens (24) de déplacement latéral des tendeurs (20), pour régler leurs positions respectives autour de la tête (10), par exemple en déplaçant les poteaux ou les rails sur lequel se déplace les chariots. Les [Fig 3] et [Fig 5] montrent des exemples illustratifs et non limitatifs de tels moyens (24) de déplacement. Dans ces exemples, les poteaux se déplacent, par exemple à l'aide de chariots motorisés sur des rails (24) (disposés au sol dans ces exemples mais ils peuvent être au plafond et de préférence au sol et au plafond afin de rigidifier l'ensemble). Dans ces exemples, les rails suivent un trajet curviligne mais un trajet rectiligne est bien entendu possible également. Les moyens de déplacement (23) des tendeurs en hauteur sont les seuls nécessaires à un bon équilibrage mais leur association avec de tels moyens (24) de déplacement latéral (transversal) permet de régler la position des tendeurs dans deux dimensions et de mieux répartir les forces de tension par rapport à la tête, notamment lorsque les positions potentiellement prises par la tête (10) sont susceptibles d'interférer avec le trajet des câbles (qui peuvent alors être déplacés grâce à ces moyens de déplacement latéral).

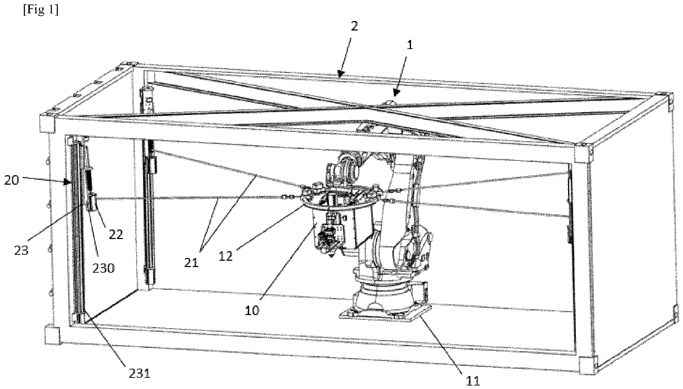

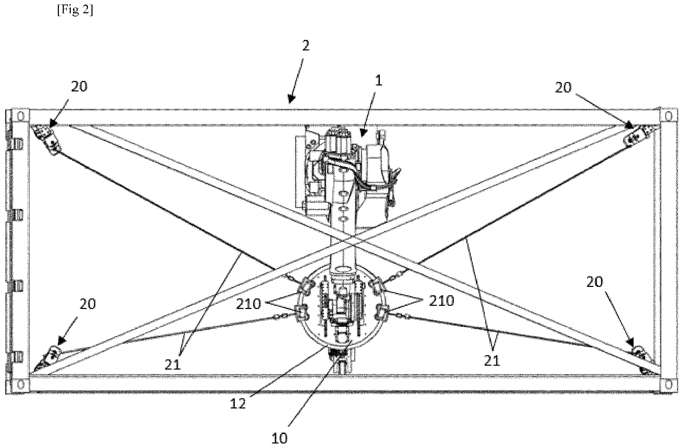

Dans certains modes de réalisation, ledit support (2) comporte au moins trois poteaux perpendiculaires au sol et répartis autour dudit bras robotique (1), de préférence à équidistance entre eux. Le nombre de poteaux pourra varier en fonction du nombre de câbles (et d'tendeurs, etc.). En général, trois câbles peuvent suffire (par exemple comme illustré sur la [Fig 5]), du moment qu'ils sont correctement répartis autour de la tête (de préférence à équidistance entre eux), mais on peut prévoir quatre câbles ou plus, notamment pour obtenir encore plus de stabilité et/ou pour faciliter l'intégration, notamment dans les cabines accueillant habituellement les machines d'usinage. Ainsi, dans certains modes de réalisation non exclusifs de ceux comportant des poteaux, ledit support (2) comporte au moins une paroi possédant une section de forme rectangulaire ou carrée entourant ledit bras robotique (1). Dans ces modes de réalisation, les câbles et les tendeurs sont de préférence au nombre de quatre, répartis aux coins de la structure. Des exemples illustratifs de tels modes de réalisation sont représentés sur les [Fig 1] et [Fig 2] montrant une cabine, comme par exemple un conteneur, hébergeant la machine d'usinage au sein d'un support formé de quatre parois verticales réparties pour former un parallélépipède rectangle et munies de poteaux de renfort. Des renforts peuvent également être prévus en haut (au sommet ou sur le toit) de la structure formant le support (2), pour stabiliser l'ensemble et notamment éviter tout mouvement non souhaité des tendeurs, par exemple comme montré de manière illustrative et non limitative sur la [Fig 2].

Dans d'autres modes de réalisation non illustrés, ledit support (2) comporte au moins une paroi possédant une section transversale de forme circulaire ou elliptique entourant ledit bras robotique (1). Dans ce cas, la cabine est de section circulaire ou elliptique et le rayon pourra varier selon la portée de la tête par rapport au socle. D'autre part, il est possible que ce ne soit pas la paroi qui définissent un trajet circulaire, mais que ce soient plutôt les moyens (24) de déplacement transversal, par exemple comme représenté de manière illustrative et non limitative sur la [Fig 5]. Dans cet exemple, trois poteaux se déplacent sur un rail (24) de forme circulaire centré sur la machine-outil. La [Fig 3] représente, de manière illustrative et non limitative, une autre variante où les moyens (24) de déplacement transversal sont formés par des arcs de cercle centrés sur la machine-outil. En effet, que le système comporte trois ou quatre supports (ou plus), il n'est généralement pas nécessaire de faire tout le tour de la machine pour permettre un bon positionnement des câbles. D'autre part, les moyens de déplacement transversal (24) peuvent être des moyens de déplacement sur les parois du conteneur.

Dans certains modes de réalisation, chacun desdits moyens (23) de déplacement desdits tendeurs (20) sur ledit support (2) comporte un chariot (230) motorisé piloté par ladite unité de contrôle (CU) pour se déplacer sur un rail (231) afin d'ajuster la hauteur de ladite tendeur (20) par rapport au sol.

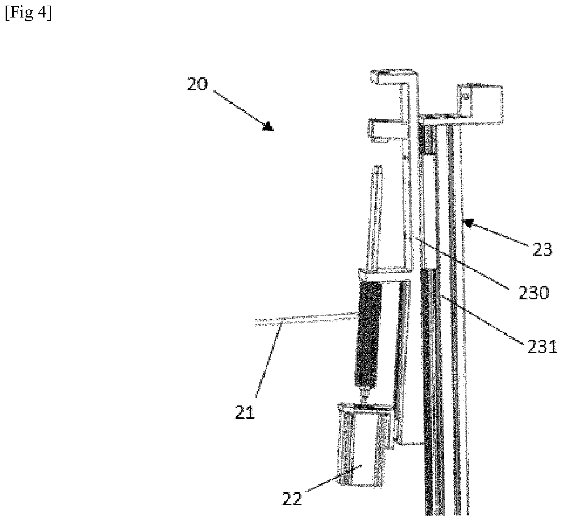

Dans certains modes de réalisation, lesdits moyens (22) réglables de tension desdits câbles (21) comportent au moins un enrouleur de câble piloté par ladite unité de contrôle (CU) et formant ladite tendeur (20). Un tel enrouleur peut par exemple être une vis à bille. La [Fig 4] représente un exemple illustratif et non limitatif des tendeurs (20) avec leurs moyens réglables de tension (22) et les moyens de déplacement vertical (23) comportant un chariot (230) se déplaçant sur un rail (231).

On comprend donc que la présente demande permet de répondre au problème de la stabilisation de l'usinage dans les machines-outils. En effet, au niveau de la tête d'usinage, différentes forces peuvent s'exercer entre les outils utilisés et la pièce à usiner (torsion, recul, chocs, vibrations, etc.) et risquer de provoquer de légers mouvements de la tête, ce qui impose généralement de surdimensionner le bras robotisé (ce qui est coûteux) mais s'accompagne souvent, malgré tout, d'une limitation de la précision de l'usinage. En proposant de placer la tête d'usinage dans un système « concentrique » de tensions (qui convergent vers le centre, par exemple le centre géométrique ou de préférence le centre de gravité) de la tête d'usinage, ces forces exercées lors de l'usinage sont alors compensées. Comme ces forces s'exercent généralement dans les trois dimensions de l'espace, les modes de réalisation préférés sont ceux où les tendeurs et câbles sont répartis autour de la tête pour compenser les tensions dans les trois dimensions de l'espace. Ainsi, il est possible de prévoir au moins 3 paires de tendeurs répartis à la surface d'une sphère (virtuelle ou dont des parties sont physiquement formées par des structures adaptées) centrée sur la tête d'usinage. Néanmoins, pour des facilités de mise en oeuvre, on préférera généralement utiliser plus de paies de tendeurs, comme par exemple illustré sur les figures 6 et 7. Dans ces figures, 4 tendeurs (et câbles) supérieurs sont disposés au-dessus du plan horizontal dans lequel se trouve le centre de la tête et 4 tendeurs (et câbles) inférieurs sont disposés en-dessous de ce plan. Ainsi, les différents tendeurs permettent de compenser les forces qui s'exercent au niveau de la tête à la fois verticalement et horizontalement. Leur répartition autour de la tête dans un plan horizontal et leur hauteur (i.e., leur position verticale) permettent à l'unité de contrôle d'ajuster les forces exercées en fonction de la position de la tête d'usinage et/ou du type d'usinage en cours. Cela permet de limiter les risques de mouvements qui en résultent et donc d'améliorer la précision de la machine et/ou de limiter son dimensionnement (et donc son coût).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

### Liste détaillée des références dans les figures :

- 1: bras robotique
- 10: tête
- 11: socle
- 12: platine
- CU: unité de contrôle
- 2: support
- 20: tendeur
- 21: câble
- 210: attache
- 22: moyens réglables de tension
- 23: moyens de déplacement du tendeur sur le support
- 230: chariot
- 231: rail
- 24: moyens de déplacement du support

## Revendications

1. Machine d'usinage comportant au moins un bras robotique (1) possédant une première extrémité montée sur un socle (11) et une seconde extrémité munie d'une tête (10) portant au moins un outil d'usinage, ledit bras robotique (1) étant articulé et motorisé pour déplacer la tête (10) dans diverses positions et inclinaisons par rapport à des pièces à usiner, en fonction de paramètres déterminés par au moins une unité de contrôle (CU) pilotant le déplacement de ladite tête (10) au cours de l'usinage,
**caractérisé en ce qu'**elle comporte un stabilisateur également piloté par ladite unité de contrôle (CU) et comprenant :
- au moins un support (2) monté solidaire du sol et muni d'au moins trois tendeurs (20) répartis autour de ladite tête (10), de préférence à équidistance entre elles,
- au moins trois câbles (21) reliant ladite tête (10) auxdits tendeurs (20),
- des moyens (22) réglables de tension desdits câbles (21) entre ladite tête (10) et lesdits tendeurs (20),
- des moyens (23) de déplacement desdits tendeurs (20) sur ledit support (2), ladite unité de contrôle (CU) pilotant le déplacement individuel de chacune des tendeurs et la tension de chacun des câbles (21) en fonction desdites positions et inclinaisons de ladite tête (10) au cours de l'usinage.

2. Machine d'usinage selon la revendication 1, **caractérisée en ce que**:
- les tendeurs (20) et les câbles (21) sont configurés par paires, avec au moins trois paires répartis autour de ladite tête (10) d'usinage,
- au sein de chaque paire, les tendeurs (20) sont disposés de part et d'autre de la tête (10) d'usinage, de façon à ce que la force de tension exercée sur ladite tête (10) d'usinage par chacun des tendeurs (20) possède au moins une composante de sens opposé à celle de l'autre tendeur de la même paire.

3. Machine d'usinage selon l'une quelconques des revendications 1 et 2, **caractérisée en ce que** l'unité de contrôle (CU) pilote le déplacement de chacun des tendeurs (20) et la tension de chacun des câbles (21) de sorte que les forces exercées par les différents câbles sur la tête (10) d'usinage se compensent entre elles, de préférence pour que leur somme soit nulle.

4. Machine d'usinage selon l'une quelconques des revendications 1 à 3, **caractérisée en ce que** chacun desdits câbles (21) est monté sur la tête (10) à l'aide d'une attache (210) libre de pivoter en fonction de l'inclinaison des câbles (21) par rapport à l'horizontale.

5. Machine d'usinage selon la revendication 4, **caractérisée en ce que** chacune desdits attaches (210) est configurée pour se déplacer librement sur une platine (12) solidaire de la tête (10), selon un trajet circulaire centré sur ladite tête (10), afin que les pivots (210) se positionnent en fonction de l'orientation et la longueur de chacun des câbles (21).

6. Machine d'usinage selon l'une quelconques des revendications 1 à 5, **caractérisée en ce que** ledit support (2) comporte au moins une paroi possédant une section transversale de forme circulaire ou elliptique entourant ledit bras robotique (1).

7. Machine d'usinage selon l'une quelconques des revendications 1 à 35 **caractérisée en ce que** ledit support (2) comporte au moins une paroi possédant une section de forme rectangulaire ou carrée entourant ledit bras robotique (1).

8. Machine d'usinage selon l'une quelconques des revendications précédentes, **caractérisée en ce que** ledit support (2) comporte au moins trois poteaux perpendiculaires au sol et répartis autour dudit bras robotique (1), de préférence à équidistance entre eux.

9. Machine d'usinage selon l'une quelconque des revendications précédentes, **caractérisée en ce que** chacun desdits moyens (23) de déplacement desdits tendeurs (20) sur ledit support (2) comporte un chariot (230) motorisé piloté par ladite unité de contrôle (CU) pour se déplacer sur un rail (231) afin d'ajuster la hauteur de ledit tendeur (20) par rapport au sol.

10. Machine d'usinage selon l'une quelconque des revendications précédentes, **caractérisée en ce que** le stabilisateur comporte également des moyens (24) de déplacement latéral des tendeurs (20), pour régler leurs positions respectives autour de la tête (10).

11. Machine d'usinage selon l'une quelconque des revendications précédentes, **caractérisée en ce que** lesdits moyens (22) réglables de tension desdits câbles (21) comportent au moins un enrouleur de câble piloté par ladite unité de contrôle (CU) et formant ledit tendeur (20).

12. Kit de stabilisation pour machine d'usinage, **caractérisé en ce qu'**il comporte un stabilisateur selon l'une quelconque des revendications précédentes.

13. Procédé de pilotage de machine d'usinage selon l'une quelconque des revendications 1 à 11, **caractérisé en ce qu'**il est mis en oeuvre par une unité de contrôle (CU) réalisant les étapes suivantes à chaque déplacement de la tête (10) d'usinage :
- détermination de la position de la tête (10) du bras robotique (1) dans l'espace, notamment par rapport au socle (11),
- détermination de l'inclinaison de la tête (10) du bras robotique (1) par rapport à la verticale,
- détermination, à partir desdites position et inclinaison de la tête (10), des positions nécessaires desdits tendeurs (20) pour qu'ils soient situés dans un même plan, dont l'inclinaison dépend de celle de la tête,
- pilotage des moyens de déplacement (23) et des moyens (22) réglables de tension des câbles (21) pour positionner lesdits tendeurs (20) auxdites positions nécessaires déterminées et fournir une tension des câbles (21) pour stabiliser la tête (10) dans ledit plan.

14. Procédé de pilotage de machine d'usinage selon l'une quelconque des revendications 2 à 11, **caractérisé en ce qu'**il est mis en oeuvre par une unité de contrôle (CU) réalisant les étapes suivantes à chaque déplacement de la tête (10) d'usinage :
- détermination de la position de la tête (10) du bras robotique (1) dans l'espace, notamment par rapport au socle (11),
- détermination de l'inclinaison de la tête (10) du bras robotique (1) par rapport à la verticale,
- détermination, à partir desdites position et inclinaison de la tête (10), des positions nécessaires desdits tendeurs (20) pour une compensation mutuelle entre les différentes composantes des forces de tension exercées par tous les tendeurs sur la tête d'usinage,
- pilotage des moyens de déplacement (23) et des moyens (22) réglables de tension des câbles (21) pour positionner lesdits tendeurs (20) auxdites positions nécessaires déterminées et fournir une tension des câbles (21) de sorte que les différentes forces exercées sur la tête se compensent entre elles, de préférence avec une résultante nulle.
